# EUROPEAN PATENT APPLICATION

(11) **EP 4 296 251 A1**
(43) Date of publication of application: **27.12.2023**
(21) Application number: 22184274.3
(22) Date of filing: 12.07.2022
(51) Int. Cl.: C05D 9/02, C05G 3/80, C05G 3/00, C05B 17/00

(54) **FERTILIZER PREPARATION PROCESS, FERTILIZER THEREFOR, AND FERTILIZER COMPOSITION**

(30) Priority: 21.06.2022 US 202217845189
(71) Applicant: Deng, Long, Long Island City, NY 11101 (US)
(72) Inventor: Deng, Long, Long Island City, NY 11101 (US)
(74) Representative: Berggren Oy

(57) **Abstract**

A process is provided for preparing fertilizer. The process includes the steps of combining a titanium composition and a silicon composition to yield a mixture, removing heavy metals from the mixture, controlling conductivity of a quantity of water in the mixture to below a predetermined amount, adding other materials to the mixture in a predetermined ratio, adding oxygen to the mixture, vibrating the mixture to minimize sticking, irradiating the mixture, and mixing the mixture with a high speed pump.

## Description

### BACKGROUND

### Field

The disclosed concept relates generally to fertilizer preparation processes and fertilizers therefor. The disclosed concept also relates to fertilizer compositions.

### Background

The invention of chemical fertilizers and pesticides has played a major role in increasing crop yields. With the help of various chemical fertilizers, crop yields per unit area have been greatly increased. Furthermore, fertilizers also make the solving of hunger and food shortage possible. However, the excessive use of fertilizers and pesticides have brought extremely serious consequences to human beings. Today's agricultural industry is a world full of chemical fertilizers, pesticides and hormones. When fertilizers and pesticides enter the soil, only roughly one-third is absorbed by crops. Of the remaining two-thirds, one-third enters the atmosphere, and one-third remains in the soil, where it mixes with groundwater.

Fertilizer and pesticide residues enter the human body through the atmosphere, water, soil and food, and eventually cause various chronic or acute diseases. In recent years, there are more and more cancer patients around us, and many families are suffering from cancer. Moreover, there are three million pesticide poisoning victims worldwide every year. In China, for example, the number of people directly poisoned by pesticide and chemical fertilizer contaminated food reaches 200,000 every year, accounting for roughly one-third of the food poisoning cases each year in China.

As it does not appear that fertilizers and pesticides will be abandoned anytime soon, there is thus a need for a solution to reduce their usage, and to help crops thrive while posing minimal, if any, risk to human health.

Furthermore, at present there are many fertilizers with silicon as a main nutrient element. However, the effective ingredients in these fertilizers are low and cannot be directly absorbed by plants, or the amount that can be effectively absorbed is low, so they cannot meet the plants' demand for nutrients and do not produce the best effect. Accordingly, there is room for improvement in today's fertilizer preparation processes and fertilizers therefor.

### BRIEF DESCRIPTION OF THE DRAWINGS

The above-mentioned and other features and advantages of this disclosure, and the manner of attaining them, will become more apparent and the disclosure itself will be better understood by reference to the following descriptions of embodiments of the disclosure taken in conjunction with the accompanying drawings, wherein:
FIG. 1 shows a simplified view of a fertilizer preparation process, in accordance with one non-limiting embodiment of the disclosed concept; and
FIG. 2 shows another simplified view of the fertilizer preparation process of FIG. 1; and
FIG. 3 is an embodiment of the disclosed concept which demonstrates the comparative trial results in wheat growth;
FIG. 4 is an embodiment of the disclosed concept which demonstrates the comparative trial results in rice growth;
FIG. 5 is an embodiment of the disclosed concept which demonstrates the comparative trial results in tea growth;
FIG. 6 is an embodiment of the disclosed concept which demonstrates the comparative trial results in bok choy growth;
FIG. 7 is an embodiment of the disclosed concept which demonstrates the comparative trial results in chili growth; and
FIG. 8 is an embodiment of the disclosed concept which demonstrates the comparative trial results in carrot growth.

### SUMMARY

A process for preparing fertilizer and a fertilizer made by the process are provided. The process comprises combining a titanium composition and a silicon composition to yield a mixture, removing heavy metals from the mixture, controlling conductivity of a quantity of water to below a predetermined amount, adding other materials to the mixture in a predetermined ratio, adding oxygen to the mixture, vibrating the mixture to minimize sticking, irradiating the mixture, and mixing the mixture with a high speed pump.

A fertilizer composition comprises 15-20% by weight nanoscale silicon dioxide, 3.5-4.5% by weight nanoscale titanium dioxide, 15-20% by weight small molecule silicone solution, 50-55% by weight small molecule water, 1-5% by weight phosphoric acid, and 0.5-1% by weight nano-silver atomic state components.

### DESCRIPTION OF THE PREFERRED EMBODIMENTS

The following description is provided to enable those skilled in the art to make and use the described embodiments contemplated for carrying out the concept. Various modifications, equivalents, variations, and alternatives, however, will remain readily apparent to those skilled in the art. Any and all such modifications, variations, equivalents, and alternatives are intended to fall within the spirit and scope of the present concept.

As employed herein, the term "nanoscale" shall mean having a particle size controlled to between 30-100 nanometers.

As employed herein, the phrase "small molecule" shall mean molecules having a molecular weight of less than 500 Daltons.

As employed herein, the phrase "nano-silver atomic state components" shall mean silver having a particle size of 30-100 nanometers.

As employed herein, the phrase "pure oxygen" shall mean that in a vacuum state, only oxygen will be injected into a mixture.

In accordance with the disclosed concept, a novel process of making a fertilizer, and fertilizer made by the process, for use by farmers, local individuals, and the like, are provided. The fertilizer yielded by the instant process promotes root growth at the seedling period in plants. It may be used as a seed treatment, wherein it significantly improves the growth of the root system of seedlings of rice, wheat, corn, beans, tobacco, vegetables and other crops. Furthermore, the inventors have discovered that the fresh weight of a root system increased by 20% compared with a control, dry weight increased by 15%, and the seedlings grew relatively strong/deep roots and relatively thriving leaves.

Other advantages associated with the instant fertilizer include alleviating pesticide damage, pest and disease prevention, blocking heavy metals, and providing for improved nutrient absorption. More specifically, timely use of the instant fertilizer may also regulate nutrient transport, supplement nutrition, alleviate damage by pesticides, and accelerate plant recovery due to insecticide/herbicide damage. The instant fertilizer may also silicify plant surface cells, enhance plants' resistance to prevent numerous diseases and drive soft-bodied pests away, which needs little or no pesticides, thereby saving costs.

Regarding heavy metals, the silicon element of the instant fertilizer can form silicic acid compounds with heavy metals to reduce their activity and toxicity. Moreover, the silicon element affects the inter-root redox power to reduce the activity of heavy metals, and the also affects the PH value in the soil to impact the plants' absorption of heavy metals. It further alters the form of heavy metals in the soil to inhibit plants' absorption. Additionally, the deposit of the silicon element in the above-ground part of the plants prevent the movement of heavy metals to the above-ground parts. The silicon element may also affect the secretions of plants' root system, thereby increasing complexation and adsorption of heavy metals. It may also inhibit the transport of heavy metals, such as cadmium and arsenic, by controlling stem and leaf distribution, activity of transport protein, and competing transport channels in the plants and achieve precise blockage of heavy metals in plants.

Finally, regarding absorption, the effective absorption rate of certain elements of the instant fertilizer, such as silicon and titanium, can reach 98%, and there has not been shown to be any adverse side effects on plant growth, or fertilizer or pesticide damage found.

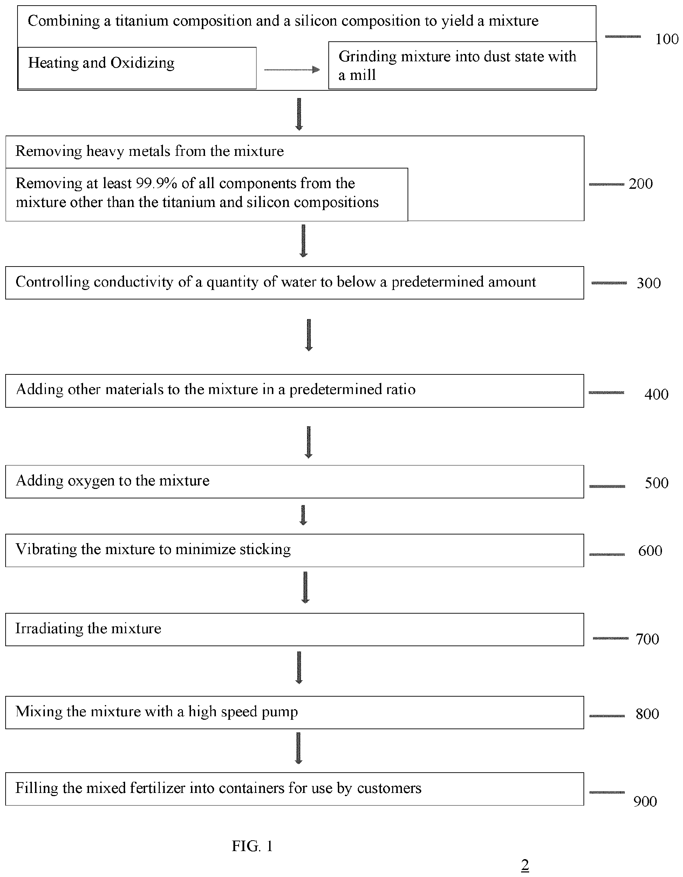

In accordance with the disclosed concept, and as shown in FIG. 1, a fertilizer may be made by a preparation process 2 including first a step 100 of combining a titanium composition and a silicon composition to yield a mixture. In one example embodiment, the titanium composition is nanoscale titanium dioxide and the silicon composition is nanoscale silicon dioxide. Furthermore, step 100 may be considered to comprise first separately heating and oxidizing the nanoscale titanium dioxide and the nanoscale silicon dioxide at a temperature between 1,200 - 2,200 degrees Celsius in order to evaporate other elements. The heating and oxidizing will transform the titanium and silicon into spherical particles at the relatively high temperatures. Subsequently, the two types of spherical particles, namely silicon dioxide and titanium dioxide, will be mixed together at a corresponding proportion of, in one example embodiment, 1:0.175. Additionally, after heating and oxidizing, the step 100 further comprises grinding the mixture into a dust state with a mill. More specifically, the mixture may be grinded ball-mill in order to grind the mixture into the dust state where it will be placed in molecular sieves.

Fertilizer preparation process 2 further includes the step 200 of removing heavy metals from the mixture. This may be done in order to purify the mixture, thereby allowing for better nutrient delivery to plants. Specifically, silicon dioxide is typically always mixed with other materials. By removing heavy metals, e.g., at least 99.9% of all components from the mixture other than the titanium and silicon compositions, a cleaner solution may ultimately be utilized in the fertilizer.

Continuing to refer to FIG. 1, in one example embodiment process 2 further includes a step 300 of controlling conductivity of a quantity of water to below a predetermined amount. In one example embodiment, the predetermined amount in step 300 may be less than 0.03 mQ/cm, an amount the inventors have discovered advantageously removes significant amounts of impurities that might otherwise have been added to the mixture, such as when the water from step 300 will later be added to the fertilizer mixture.

After steps 100-300 have been performed, the fertilizer is mixed. More specifically, other materials are added to the mixture at step 400 in a predetermined ratio, as will be discussed below. These other materials added to the mixture may include a small molecule liquid silicone solution, small molecule water, phosphoric acid, and nano-silver atomic state components. Furthermore, one example ratio of the materials being mixed at step 400 includes 15-20% nanoscale silicon dioxide, 3.5-4.5% nanoscale titanium dioxide, 15-20% small molecule silicone solution, 50-55% small molecule water, 1-5% phosphoric acid, and 0.5-1% nano-silver atomic state components. The nanoscale silicon dioxide may, in one example embodiment, comprise 16.5-18.5% by weight of the fertilizer composition, and the nanoscale titanium dioxide may comprise 3.75-4.25% by weight of the fertilizer composition. Additionally, the small molecule silicone solution may comprise 16.5-18.5% by weight of the fertilizer composition, the small molecule water may comprise 51.5-53.5% by weight of the fertilizer composition, and the nano-silver atomic state components may comprise 0.65-0.85% by weight of the fertilizer composition. The inventors have discovered that the aforementioned ratio of fertilizer subcomponents advantageously promotes the effect of plant nutritional growth, improves crop yields and quality. Once the predetermined ratio of constituent components has been provided for, step 500 of process 2 calls for adding oxygen to the mixture. In one example embodiment, the oxygen added is pure oxygen. Oxygenating the mixture in this manner allows future plant growth to be better stimulated.

Next, at step 600, the mixture is vibrated in order to minimize sticking between constituent components, at step 700 the mixture is irradiated, at step 800 the mixture is mixed with a high speed pump, thereby naturally oxygenating the mixture, and at step 900 a final step may include filling the mixed fertilizer into containers for use by customers, labelling, and/or storage. Additionally, step 700 may optionally include applying a yellow light cycle irradiation catalyst to the mixture. Doing this allows the titanium dioxide to act as a liquid catalyst, which allows for a transfer of light energy into chemical energy, thereby improving the ability of the organic materials to grow. Furthermore, this advantageously improves the ability of silicon and titanium constituent components to mix, as it is known that these two components otherwise have greater difficulty mixing with one another. Regarding vibrating, step 600 may include ultrasonically vibrating molecules with a molecular weight of 1,000 Daltons or less. The inventors have discovered that vibrating these molecules ultrasonically advantageously separates materials into a relatively nice fine grain so that they don't stick.

The fertilizer produced by process 2 has been shown to promote growth at the nutritional phase, wherein it not only has the dual role of promoting cell division and cell elongation, but also can improve the chlorophyll content of leaves, enhance photosynthesis, increase the accumulation of photosynthetic assimilation products. In this manner, the fertilizer advantageously promotes the effect of plant nutritional growth and improves crop yields and quality. Moreover, the instant fertilizer also promotes fruiting at the reproductive period. That is, it can improve the germination rate of pollen and promote the elongation of pollen tubes, which is conducive to plant fertilization. It can also improve the fruit set rate and fruit maturity rate. In the product maturity period, the number and the weight of grains increases, the size of the melons and fruits become even, and quality of the products are improved. Further yet, after entering the plant, the instant fertilizer not only strengthens photosynthesis and promotes growth and development, but also stimulates certain protective enzyme activities in the plant, which can greatly reduce the harmful substances produced in the plant due to the adverse living conditions (e.g., damage to normal functions by malondialdehyde).

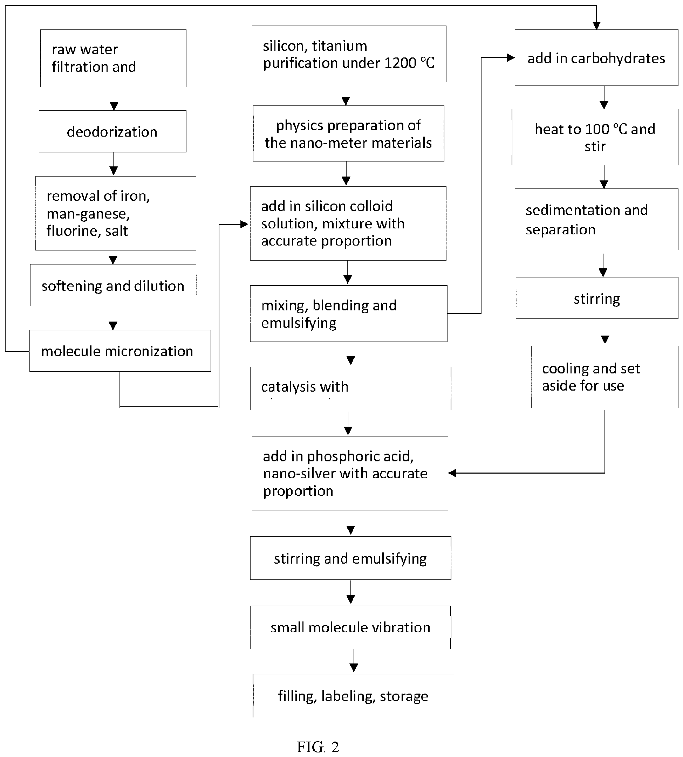

FIG. 2 shows preparation process 2 described in an alternative manner.

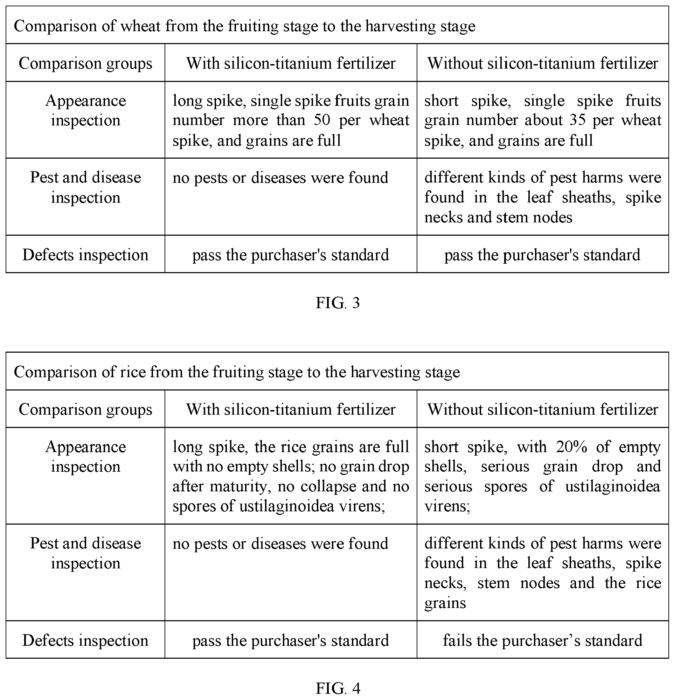

FIGS. 3-8 show comparative spraying trials of the instant fertilizer on wheat, rice, tea, bok choy, chili, and carrot plants. As shown in FIG. 3, the test group (e.g., "with silicon-titanium fertilizer") was sprayed three times with silicon-titanium fertilizer, and the control group (e.g., "without silicon-titanium fertilizer") was not sprayed with silicon-titanium fertilizer. Upon inspection, the spike of the test group is long, a single spike fruit grain numbering more than 50, and grains are full. The spike of the control group is short, a single spike fruits grain number about 35, and grains are full. Regarding pests and diseases, no pests or diseases were found in the test group; however, different kinds of pest harms were found in the leaf sheaths, spike necks and stem nodes of the comparison group plants. Regarding defects, both the test group and the control group passed the purchaser's standard. In conclusion, spraying of the silicon-titanium fertilizer can improve the utilization rate of fertilizer, accelerate growth, increase tillering, thicken and strengthen the stalks, stretch the leaves, increase the fruit setting rate, increase thousand-grain weight, and increase the plants capability in drought resistance, dry and hot wind resistance, and collapse resistance by more than 80%.

As shown in FIG. 4, the test group was sprayed three times with silicon-titanium fertilizer, and the control group did not use the silicon-titanium fertilizer. Upon inspection, the spike of the test group is long with abundant grains, the rice grains are full with no empty shells; no grain drop after maturity, no collapse and no spores of ustilaginoidea virens. By way of comparison, the spikes of the control group are short with 20% empty shells, serious grain drop and serious spores of ustilaginoidea virens. Regarding pests and diseases, no pests or diseases were found in the test group; however, different kinds of pest harms were found in the leaf sheaths, spike necks, stem nodes and the rice grains of the comparison group plants. Regarding defects, the test group passed the purchaser's standard, while the control group failed the purchaser's standard. In conclusion, application of the silicon-titanium fertilizer can improve the utilization rate of fertilizer. With rice being a siliconphilic crop, the application of the silicon titanium fertilizer causes the surface dells of the rice to thicken, the crop stem and leaves to grow thick, strong and straight, root systems to be well-developed, leaves to be uplifted, photosynthesis to be enhanced, effective tillering to be improved, fruit setting rate increased with large spikes and abundant grains, resistance capability against drought and collapse to be increased by more than 85%, promotion of quick maturity, increasing the quality of rice, increasing the resistance to pests and diseases, and reducing the incidence of disease by 75%.

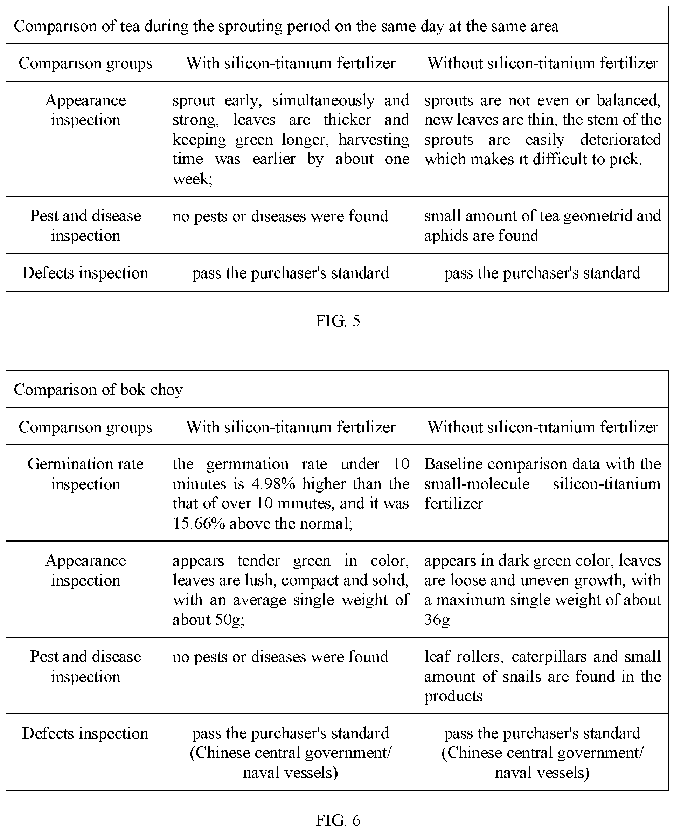

As shown in FIG. 5, the test group was sprayed three times with silicon-titanium fertilizer, and the control group did not use silicon-titanium fertilizer. Upon inspection, the test group sprouted early, simultaneously and robustly. Leaves of the test group were thicker and more green. Further, harvesting time was earlier by about one week. Conversely, sprouts of the control group are not even or balanced, new leaves are thin, and the stem of the sprouts are easily deteriorated which makes it difficult to pick. Regarding pests and diseases, no pests or diseases were found in the test group, and a small amount of tea geometrid and aphids are found in the control group. Furthermore, both the test group and the control group passed the purchaser's standard. In conclusion, spraying the silicon-titanium fertilizer can improve the utilization rate of fertilizer, increase the yields by 30%, and significantly improve the quality of the tea, increase the thickness of the leave, enhance the germination rate of new leaves and the tenderness of the new sprouts. Moreover, the content of tea polyphenols, catechins, proteins, etc. in tea leaves are increased. More specifically, the content of theophyllic acid and theanine are significantly increased, and the tea leaves contains a strong tea aroma. The instant fertilizer also promotes photosynthesis, root development, and metabolism, increasing the life of tea trees, increasing the resistance to pests and diseases, and reducing the incidence of disease by 75%.

As shown in FIG. 6, in the test group, the germination rate of bok choy under 10 minutes is 4.98% higher than the that of over 10 minutes, and it was 15.66% above the control group. Upon inspection, the test group appears to have a tender green color, leaves that are lush, is compact and solid, with an average single weight of about 50g. The control group, by way of comparison, appears to have a dark green color, leaves that are loose and uneven in terms of growth, with a maximum single weight of about 36g. Regarding pests and diseases, no pests or diseases were found in the test group, but leaf rollers, caterpillars and a small amount of snails were found in the control group. Additionally, both the test group and the control group passed the purchaser's standard. In conclusion, the utilization rate of fertilizer is significantly increased after the application of the silicon-titanium fertilizer, the plant grows strong, leaves appear to have a rich green color, survival rate is enhanced, the surface appears bright and overall is a good appearance. Furthermore, in the test group there was a heavy single plant with thick leaves, rich water content, a yield that increased by 15%, a plant that was transportable, and with an extended shelf life.

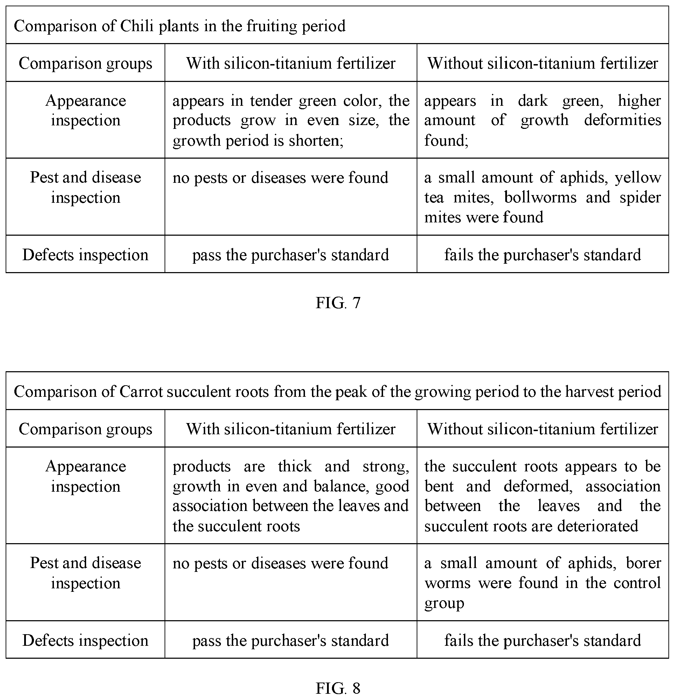

As shown in FIG. 7, the test group appears to have a tender green color, the products grow in an even size, and the growth period is shortened. Conversely, in the control group, the Chili plant appears dark green and has a higher amount of growth deformities. Regarding pests and diseases, upon inspection no pests or diseases were found in the test group. Conversely, a small amount of aphids, yellow tea mites, bollworms and spider mites were found in the control group. Regarding defects, the test group passed the purchaser's standard, while the control group fails the purchaser's standard. In conclusion, the application of the silicon-titanium fertilizer may increase the utilization rate of fertilizer, make the plants grow strong, make the leaves appear deep green, and make the root systems become well-developed. Furthermore, the fertilizer advantageously promotes a good growth trend, more fruit setting, resistance to collapse, early maturity, more branches, and kernels that are full and complete. Finally, usage of the instant fertilizer has been shown to leads to less empty shells, high kernel yields, good merchantability, as well as a yield increased by 15% in general.

FIG. 8 shows the instant fertilizer used in a test group on carrot plants and a control group of carrot plants with no fertilizer. Upon inspection, products of the test group are thick and strong, growth is even and balanced, and there is a good association between the leaves and the succulent roots. By way of comparison, the succulent roots of the control group appear to be bent and deformed, and the association between the leaves and the succulent roots is deteriorated. Regarding pests and disease, no pests or diseases were found in the test group, and a small amount of aphids and borer worms were found in the control group. Regarding defects, the test group passed the purchaser's standard, while the control group fails the purchaser's standard. In conclusion, the silicon-titanium fertilizer disclosed herein is a high quality regulating fertilizer that is good in health care. It will be appreciated that the instant fertilizer is a new type of fertilizer that is configured to produce high quality and substantially pollution-free agricultural products.

Additionally, while this disclosure has been described as having exemplary methods, the present disclosure can be further modified within the spirit and scope of this disclosure. This application is therefore intended to cover any variations, uses, or adaptations of the disclosure using its general principles. Further, this application is intended to cover such departures from the present disclosure as come within known or customary practice in the art to which this disclosure pertains and which fall within the limits of the appended claims.

## Claims

1. A process for preparing fertilizer comprising the steps of:
- combining a titanium composition and a silicon composition to yield a mixture;
- removing heavy metals from the mixture;
- controlling conductivity of a quantity of water to below a predetermined amount;
- adding other materials to the mixture in a predetermined ratio;
- adding oxygen to the mixture;
- vibrating the mixture to minimize sticking;
- irradiating the mixture; and
- mixing the mixture with a high speed pump.

2. The process according to claim 1, wherein the titanium composition is nanoscale titanium dioxide and the silicon composition is nanoscale silicon dioxide.

3. The process according to claim 2, wherein the combining step comprises first separately heating and oxidizing the nanoscale titanium dioxide and the nanoscale silicon dioxide at a temperature greater than 1,200 degrees Celsius.

4. The process according to claim 3, wherein, after heating and oxidizing, the combining step further comprises grinding the mixture into a dust state with a mill.

5. The process according to claim 3, wherein the predetermined amount is less than 0.03 mQ/cm.

6. The process according to claim 3, wherein the other materials comprise a small molecule silicone solution, small molecule water, phosphoric acid, and nano-silver atomic state components.

7. The process according to claim 6, wherein the predetermined ratio includes 15-20% nanoscale silicon dioxide, 3.5-4.5% nanoscale titanium dioxide, 15-20% small molecule silicone solution, 50-55% small molecule water, 1-5% phosphoric acid, and 0.5-1.0% nano-silver atomic state components.

8. The process according to claim 1, wherein the adding oxygen step comprises adding pure oxygen.

9. The process according to claim 1, wherein the irradiating step comprises applying a yellow light cycle irradiation catalyst to the mixture.

10. The process according to claim 1, wherein the vibrating step comprises ultrasonically vibrating molecules with a molecular weight of 1,000 Daltons or less.

11. The process according to claim 1, wherein the removing heavy metals step comprises removing at least 99.9% of all components from the mixture other than the titanium and silicon compositions.

12. A fertilizer made by the process of:
- combining a titanium composition and a silicon composition to yield a mixture;
- removing heavy metals from the mixture;
- controlling conductivity of a quantity of water to below a predetermined amount;
- adding other materials to the mixture in a predetermined ratio;
- adding oxygen to the mixture;
- vibrating the mixture to minimize sticking;
- irradiating the mixture; and
- mixing the mixture with a high speed pump.

13. The fertilizer according to claim 12, wherein the titanium composition is nanoscale titanium dioxide and the silicon composition is nanoscale silicon dioxide; and wherein the combining step comprises first separately heating and oxidizing nanoscale titanium dioxide and nanoscale silicon dioxide at a temperature greater than 1,200 degrees Celsius.

14. The fertilizer according to claim 12, wherein the predetermined ratio includes 15-20% nanoscale silicon dioxide, 3.5-4.5% nanoscale titanium dioxide, 15-20% small molecule silicone solution, 50-55% small molecule water, 1-5% phosphoric acid, and 0.5-1.0% nano-silver atomic state components.

15. The fertilizer according to claim 12, wherein the removing heavy metals step comprises removing at least 99.9% of all components from the mixture other than the titanium and silicon compositions.

16. A fertilizer composition comprising:
15-20% by weight nanoscale silicon dioxide;
3.5-4.5% by weight nanoscale titanium dioxide;
15-20% by weight small molecule silicone solution;
50-55% by weight small molecule water;
1-5% by weight phosphoric acid; and
0.5-1.0% by weight nano-silver atomic state components.

17. The fertilizer composition according to claim 16, wherein the nanoscale silicon dioxide comprises 16.5-18.5% by weight of the fertilizer composition; and wherein the nanoscale titanium dioxide comprises 3.75-4.25% by weight of the fertilizer composition.

18. The fertilizer composition according to claim 17, wherein the small molecule silicone solution comprises 16.5-18.5% by weight of the fertilizer composition.

19. The fertilizer composition according to claim 17, wherein the small molecule water comprises 51.5-53.5% by weight of the fertilizer composition.

20. The fertilizer composition according to claim 17, wherein the nano-silver atomic state components comprise 0.65-0.85% by weight of the fertilizer composition.
